# EUROPÄISCHE PATENTANMELDUNG

(11) **EP 4 796 960 A1**
(43) Veröffentlichungstag der Anmeldung: **26.08.2026**
(21) Anmeldenummer: 26159600.1
(22) Anmeldetag: 19.02.2026
(51) Int. Cl.: G02B 1/00, G02B 5/28, H01S 3/00

(54) **OPTISCHER RESONATOR**

(30) Priorität: 25.02.2025 DE 102025106983
(71) Anmelder: Physikalisch-Technische Bundesanstalt Braunschweig und Berlin, 38116 Braunschweig (DE)
(72) Erfinder: Sauer, Steffen, 30451 Hannover (DE); Kroker, Stefanie, 38116 Braunschweig (DE)
(74) Vertreter: Gramm, Lins & Partner Patent- und Rechtsanwälte PartGmbB

(57) **Zusammenfassung**

Die Erfindung betrifft einen Laserresonator (10) mit einem Lichteintritt (12) für einen Laserstrahl (14), einem ersten Spiegel (20), einem zweiten Spiegel (22) und einem Lichtaustritt (18), wobei der erste Spiegel (20) und der zweite Spiegel (22) so angeordnet sind, dass ein Laserstrahl (14), der durch den Lichteintritt (12) eintritt, so auf den ersten Spiegel (20) richtbar ist, dass der Laserstrahl (14) vom ersten Spiegel (20) auf den zweiten Spiegel (22) reflektiert wird und aus dem Lichtaustritt (18) austritt, zumindest einer der Spiegel (20, 22) mindestens einen Metaspiegelabschnitt (24) aufweist, wobei der erste Spiegel und/oder der zweite Spiegel jeweils mindestens einen Krümmungsbereich aufweist, in dem mindestens einer der Metaspiegelabschnitte angeordnet ist und der eine effektive Krümmung ungleich Null aufweist, und eine Groboberfläche des Krümmungsbereichs ungekrümmt, insbesondere planar ist.

## Beschreibung

Die Erfindung betrifft einen Laserresonator mit (a) einem Lichteintritt für einen Laserstrahl, (b) einem ersten Spiegel, (c) einem zweiten Spiegel und (d) einem Lichtaustritt, (e) wobei der erste Spiegel und der zweite Spiegel so angeordnet sind, dass durch den Lichteintritt einen Laserstrahl so auf den ersten Spiegel richtbar ist, dass der Laserstrahl vom ersten Spiegel auf den zweiten Spiegel reflektiert wird und aus dem Lichtaustritt austritt, (f) wobei vorzugsweise zumindest einer der Spiegel mindestens einen Metaspiegelabschnitt aufweist. In einem zweiten Aspekt betrifft die Erfindung ein Verfahren zur Herstellung eines Laserresonators mit einem Lichteintritt und einem Lichtaustritt, mit dem Schritt des Bereitstellens eines ersten und eines zweiten Spiegels.

Laserresonatoren dienen in der Regel der Verstärkung von Laserlicht, der Frequenzauswahl und/oder der Erhöhung einer Frequenzstabilität des Laserstrahls.

In der Regel weisen Laserresonatoren mindestens zwei Spiegel auf, zwischen denen der Laserstrahl, nachdem er in den Laserresonator durch den Lichteintritt eingetreten ist, mindestens einmal jeweils von dem ersten und zweiten Spiegel reflektiert wird, bevor der Laserstrahl an dem Lichtaustritt aus dem Laserresonator austritt. Der Laserresonator hat Eigenfrequenzen, die vor allem von der geometrischen Resonatorlänge abhängen. Daher wirkt der Laserresonator zudem als Frequenzfilter.

Die Spiegel weisen in der Regel dielektrische Schichten auf, damit eine Reflektivität der Spiegel für bestimmte Wellenlängen erhöht wird, während andere Wellenlängen beispielsweise fast gar nicht reflektiert werden. Dadurch wird erreicht, dass die gewünschten Wellenlängen eine höhere Laserleistung am Lichtaustritt des Resonators aufweisen, da andere Wellenlängen nur einen geringen Anteil der Gesamtlaserleistung ausmachen. Deshalb ist eine hohe Frequenzselektivität wünschenswert.

Je länger die Resonatorlänge und je größer der Strahldurchmesser des Laserstrahls beim Auftreffen auf die Spiegel, desto weniger wirkt sich thermisches Rauschen auf die Resonatorlänge und damit auf die Eigenfrequenzen aus.

Wünschenswert ist, dass der Resonator möglichst wenig thermisches Rauschen aufweist. Dadurch wird eine höhere Frequenzstabilität des aus dem Resonator austretenden Laserstrahls erreicht. Dies ist besonders im Bereich hochpräziser Messungen beispielsweise in den Bereichen von Interferometrie, Quantenoptik, optischen Atomuhren, der Messung von Gaseigenschaften mittels Lasern oder der Messung von Gravitationswellen besonders wichtig. Die Frequenzstabilität bezeichnet dabei insbesondere den Quotienten aus einer Frequenzdifferenz, die die Differenz zwischen einer maximalen und minimalen Laserfrequenz beschreibt, geteilt durch die Durchschnittslaserfrequenz.

Nachteilig an bekannten frequenzstabilisierten Laserresonatoren ist, dass eine höhere Frequenzstabilität in der Regel einhergeht mit einem höheren Volumen und/oder Gewicht des Resonators sowie in der Regel einer besonders aufwendigen Herstellung, Positionierung und/od er Justage der Spiegel.

Aus US 2021 /0 344 157 A1 ist ein optischer Resonator mit zwei Spiegeln und darauf einem Spiegelbereich bekannt, der eine Phasenplatte aufweist, die verschieden hohe Abschnitte mit Höhenunterschieden im Bereich der Phasenunterschiede im Lichtstrahl aufweist. Der Resonator dient der Pulsdauer-Erhöhung eines Lichtpulses. Dies wird durch die Anpassung der Phasen mittels des Spiegel-Phasenplatten-Abschnitts erreicht.

DE 10 2021 106 362 A1 beschreibt einen Resonator für eine spektrale Gas-Untersuchung. Die Spiegel sind sphärisch konkav, ermöglichen eine Vielzahl von Umläufen im Resonator und haben seitlich makroskopische Vorsprünge für eine größere Reflektionsfläche.

Aus DE 10 2016 213 561 A1 ist ein Laser und ein Spiegel mit einer Vielzahl unterschiedlich verkippter Spiegelteilflächen, die einstückig oder monolithisch ausgebildet sein können und die eine Fokussierung der Lichtstrahlen bewirken können, bekannt.

Aus DE 10 2022 125 537 A1 ist ein optischer Resonator mit einer oder mehreren Oberflächenstrukturbereichen auf den Spiegeln mit Höhenunterschieden im Bereich der optischen Wellenlänge bekannt. Diese Bereiche dienen zum Einkoppeln, Auskoppeln von Licht in oder aus dem Resonator und zum transversalen Versetzen der Lichtverläufe im Umlauf im Resonator.

Aus US 2019/0 064 532 A1 sind Metaoberflächen bekannt, insbesondere für optische Anwendungen und die Herstellungsverfahren wie Lithografie und Ätzen.

Aus dem Artikel "Planar Photonics with Metasurfaces " von Alexander V. Kildishev, Alexandra Boltasseva und Vladimir M. Shalaev sind Metaoberflächen für verschiedene Reflexions- und Brechungsvarianten bekannt, die von den klassischen Gesetzen dazu abweichen, insbesondere für konkrete Anwendungen wie Nanoantennen oder hyperbolischer Dispersion.

Aus DE 10 2020 204 808 A1 ist eine Anordnung zum optischen Verbreitern von Laserpulsen mit zwei Spiegeln bekannt, auf denen einzelne Spiegelabschnitte mit nichtklassischen Effekten zur Selbstphasenmodulation und Erzeugen neuer Frequenzen angeordnet sind. Die Spiegel können planar sein, wenn der Strahl kollimiert ist oder geometrisch gekrümmt, wenn eine Fokussierung erfolgen soll.

Die Aufgabe der Erfindung ist, einen verbesserten, insbesondere frequenzstabileren, Laserresonator bereitzustellen.

Die Aufgabe wird durch einen gattungsgemäßen Laserresonator gelöst, der sich dadurch auszeichnet, dass der erste und/oder zweite Spiegel vorzugsweise einen Krümmungsbereich aufweist, in dem mindestens einer der Metaspiegelabschnitte angeordnet ist und der eine effektive Krümmung ungleich Null aufweist, und wobei eine Groboberfläche des Krümmungsbereichs vorzugsweise ungekrümmt, insbesondere planar ist.

Ferner wird die Aufgabe durch ein gattungsgemäßes Verfahren gelöst, das sich durch die Schritte (b) Oberflächenstrukturieren eines Substrats und/oder einer Beschichtung auf dem Substrat des ersten und/oder zweiten Spiegels derart, dass zumindest einer der Spiegel mindestens einen Metaspiegelabschnitt aufweist, wobei der erste und/oder zweite Spiegel einen Krümmungsbereich aufweist, in dem mindestens einer der Metaspiegel¬ab¬schnitte angeordnet ist und der eine effektive Krümmung ungleich Null aufweist, -und wobei eine Groboberfläche des Krümmungsbereichs ungekrümmt, insbesondere planar ist, und (c) Anordnen und Fixieren des ersten Spiegels und des zweiten Spiegels derart, dass durch den Lichteintritt ein Laserstrahl so auf den ersten Spiegel richtbar ist, dass der Laserstrahl vom ersten Spiegel auf den zweiten Spiegel reflektiert wird und aus dem Lichtaustritt austritt, auszeichnet.

Der Vorteil von Metaspiegelabschnitten ist, dass eine hohe Frequenzselektivität und Frequenzstabilität erreicht werden. Metaspiegelabschnitte benötigen keine Vielzahl von dielektrischen Beschichtungen, um eine hohe Reflektivität für einen bestimmten, in der Regel schmalen, Wellenlängenbereich zu erreichen. Deshalb haben sie ein deutlich geringeres thermisches Rauschen als dielektrische Spiegel. Ebenfalls können Materialien für die Metastrukturen verwendet werden, diese zum Beispiel einen geringeren mechanischen Verlust aufweisen, sodass das Rauschen zusätzlich vermindert wird.

Die Frequenzstabilität steigt in der Regel mit der optischen Weglänge, die der Laserstrahl im Laserresonator verbringt. Die optische Weglänge kann durch einen Spiegelabstand oder die Anzahl an Reflektionen innerhalb des Resonators erhöht werden. Eine entsprechende Erhöhung der Anzahl an Reflexionen zur Erhöhung der Frequenzstabilität ist mittels dielektrischer Spiegel in der Regel nur unter Inkaufnahme von Nachteilen wie einem höheren Rauschen, einer höheren Anzahl an Spiegeln und damit einem höheren Volumen und Gewicht des Resonators und/oder einer aufwendigen Justage der Vielzahl an Spiegeln zueinander möglich. Eine alternative Möglichkeit zur Erhöhung der Frequenzstabilität verwendet einen größeren Abstand zwischen den Spiegeln, was jedoch den Nachteil eines größeren Volumens des Resonators mit sich brächte.

Im Gegensatz dazu ermöglichen es Metaspiegelabschnitte in der beschriebenen Anordnung in dem Laserresonator, einen frequenzstabilen Laserresonator mit einem geringen Volumen und Gewicht zu realisieren.

Im Rahmen der vorliegenden Beschreibung wird unter einem Lichteintritt insbesondere ein Bereich des Laserresonators verstanden, der so ausgebildet ist, dass ein Laserstrahl durch den Lichteintritt in einen Resonator-Innenraum eintreten kann. Der Lichteintritt ist beispielsweise eine Öffnung des Resonators oder ein zumindest zu 50% transmittierender Bereich eines Bauteils des Resonators.

Unter einem Lichtaustritt wird ein Bereich des Laserresonators verstanden, der so ausgebildet ist, dass ein Laserstrahl durch den Lichtaustritt aus dem Resonator-Innenraum austreten kann. Der Lichtaustritt ist beispielsweise eine Öffnung des Resonators oder ein zumindest zu 50%, vorzugsweise zumindest 90%, transmittierender Bereich eines Bauteils.

Der Lichteintritt ist vorzugsweise an dem ersten oder zweiten Spiegel ausgebildet. Der Lichtaustritt ist vorzugsweise an dem ersten oder zweiten Spiegel ausgebildet.

Mit anderen Worten weist der erste oder zweite Spiegel vorzugsweise einen Bereich auf, der zumindest zu 0,1% transmittierend für den Laserstrahl ist, vorzugsweise zu mindestens 0,5%.

Vorzugsweise sind der Lichteintritt und der Lichtaustritt nicht an demselben Spiegel ausgebildet. Alternativ sind der Lichteintritt und der Lichtaustritt an demselben Spiegel ausgebildet.

Beispielsweise sind die Spiegel derart ausgebildet und angeordnet, dass ein durch den Lichteintritt eintretender Laserstrahl einmal, zweimal, dreimal, viermal oder öfter von dem ersten beziehungsweise zweiten Spiegel reflektiert wird und dann aus dem Resonatorinnenraum durch den Lichtaustritt austritt.

Unter einem Spiegel wird insbesondere ein optisches Element verstanden, dass so ausgebildet ist, dass an mindestens einem Spiegelabschnitt des Spiegels mindestens 90% eines auf den Spiegel auftreffenden Lichtstrahls reflektiert werden, insbesondere in einem Reflexionswinkel, der einem Einfallswinkel ± 30° entspricht. Der Spiegel wird als die Gesamtheit aller Abschnitte, die beispielsweise Spiegelabschnitte, Metaspiegelabschnitte, Transmissionsabschnitte und anders aufweisen können, verstanden.

Vorzugsweise weisen der erste und/oder zweite Spiegel an mindestens einem Spiegelabschnitt eine Reflektivität von mindestens 99 % auf, vorzugsweise mindestens 99,5%, vorzugsweise mindestens 99,99 %, vorzugsweise mindestens 99,997 %.

Der erste Spiegel ist von dem zweiten Spiegel vorzugsweise beabstandet, vorzugsweise um mindestens 2 mm, vorzugsweise um maximal 100 Meter, vorzugsweise um maximal 1 Meter, vorzugsweise um maximal 50 cm.

Der Laserresonator weist vorzugsweise maximal drei Spiegel auf, vorzugsweise genau zwei Spiegel.

Die Spiegel weisen vorzugsweise eine maximale Ausdehnungsrichtung einer Oberfläche, auf der der Laserstrahl reflektiert wird, von mindestens 1 mm, vorzugsweise mindestens 2 mm, vorzugsweise mindestens 5 mm auf, vorzugsweise maximal 2 Meter, vorzugsweise maximal 1 Meter, vorzugsweise maximal 50 cm, vorzugsweise maximal 20 cm.

Vorzugsweise ist der erste Spiegel so angeordnet, dass ein Lichtstrahl, der unter einem Einfallswinkel von 90° auf den ersten Spiegel auftrifft, von dem ersten Spiegel auf den zweiten Spiegel reflektiert wird. Vorzugsweise gilt dasselbe für einen Lichtstrahl, der unter einem Einfallswinkel zwischen 89° und 91° auf den ersten Spiegel auftrifft. Vorzugsweise ist der Lichteintritt an dem zweiten Spiegel angeordnet.

Vorzugsweise weisen der erste Spiegel und der zweite Spiegel jeweils mindestens einen Metaspiegelabschnitt auf, vorzugsweise mindestens jeweils zwei Metaspiegelabschnitte.

Unter einem Metaspiegelabschnitt wird insbesondere ein Bereich einer Oberfläche des Spiegels verstanden, der eine Oberflächenstruktur aufweist, deren kleinste Strukturen zwischen 20 Nanometer und 700 nm messen.

Mit anderen Worten weist der Metaspiegelabschnitt eine Oberflächenstruktur auf, die eine Amplitude und Phase von darauf auftreffenden Laserstrahlen beeinflusst, insbesondere anormal reflektiert.

Zumindest ein Metaspiegelabschnitt, insbesondere zumindest eine Mehrheit der Metaspiegelabschnitt, weist vorzugsweise mindestens eine zumindest teilweise periodische Oberflächenstruktur auf, die einen auftreffenden Laserstrahl anormal reflektiert. Vorzugsweise weisen alle Metaspiegelabschnitt weist beispielsweise mindestens eine zumindest teilweise periodische Oberflächenstruktur auf, die einen auftreffenden Laserstrahl anormal reflektiert. Unter anormaler Reflektion wird insbesondere verstanden, dass ein unter einem Einfallswinkel auftreffender Laserstrahl zu zumindest 50%, vorzugsweise zu zumindest 75%, reflektiert wird, unter einem Reflektionswinkel, der nicht dem Einfallswinkel entspricht. Im Gegensatz dazu wird unter normaler Reflektion verstanden, wenn der Einfallswinkel dem Ausfallswinkel entspricht.

Es ist möglich, dass einer der Spiegel oder beide Spiegel einen, insbesondere genau einen, Metaspiegelabschnitt haben, der normale Reflexion zeigt.

Vorzugsweise weist der Spiegel (a) ein Substrat und (b) einen Metaspiegelabschnitt auf, der eine in das Substrat und/oder in eine Beschichtung auf dem Substrat eingebrachte Reflektivstrukturierung aufweist. Die Beschichtung ist insbesondere keine dielektrische Beschichtung und/oder weist, ohne Reflektivstrukturierung, eine Reflektivität von insbesondere maximal 49%, insbesondere maximal 30% auf. Beispielsweise weist die Beschichtung zumindest eines der folgenden Materialien auf: Aluminiumoxid (Al2O3), Siliziumnitrid (SiN3), Tantaloxid (Ta2O3), Diamant, Silizium, Germanium.

Unter dem Substrat wird insbesondere ein Festkörperbereich des Spiegels verstanden, der eine Tiefe von mindestens 100 µm, insbesondere mindestens 1 mm aufweist. Das Substrat weist beispielsweise Silizium, Siliziumoxid, andere Siliziumverbindungen, Saphir, Diamant, Quarzglas, Titanium-Silikatglas und/oder eine Keramik auf, die insbesondere polykristallin ist und/oder die Magnesium, Aluminium und/oder Silicium aufweist, beispielsweise eine solche Keramik, die unter dem kommerziellen Namen NexCera erhältlich ist.

Eine Kombination des Substrats mit der Beschichtung wird vorzugsweise passend für die angestrebte Reflektivität und den angestrebten Reflektionswinkel sowie gegebenenfalls passend für die Wellenlänge des Laserstrahls und/oder die Temperatur gewählt. Bei verschiedenen Kombinationen ergeben sich verschiedene Brechungsindices, die von der Wellenlänge und der Temperatur abhängen können.

Unter der Reflektivstrukturierung wird insbesondere eine Oberflächenstruktur verstanden, die mittels einer lokalen Entfernung von Teilen des Substrats und/oder von Teilen einer Beschichtung, die sich auf dem Substrat befindet, erzeugt wird und die eine Amplitude, Phase und/oder einen Reflexionswinkel eines von der Reflektivstrukturierung reflektierten Lichtstrahls im Vergleich zum Substrat, das keine Strukturierung aufweist ist, verändert. Insbesondere ist die Reflektivstrukturierung derart ausgebildet, dass mindestens 70%, vorzugsweise mindestens 90%, vorzugsweise mindestens 95%, vorzugsweise mindestens 99%, vorzugsweise mindestens 99,9% einer Intensität eines einfallenden Lichtstrahls von dem Metaspiegelabschnitt reflektiert wird.

Der Vorteil der Reflektivstrukturierung ist, dass eine Strukturtiefe oder Tiefe der Reflektivstrukturierung kleiner als 3 µm, insbesondere kleiner als 2 µm, insbesondere höchstens 1,9 µm betragen kann und im Vergleich zu üblicherweise verwendeten dielektrischen Schichten geringer ist, deren Tiefe in der Regel über 2 µm beträgt. Dadurch wird vorteilhaft durch die Metaspiegelabschnitte das Rauschen verringert und dennoch eine hohe Reflektivität erreicht.

Vorzugsweise beträgt ein Flächenanteil von einer Fläche, auf der das Substrat oder die Beschichtung für die Reflektivstrukturierung zumindest teilweise entfernt sind, mindestens 35% einer Gesamtfläche des Metaspiegelabschnitts, vorzugsweise mindestens 40%, vorzugsweise mindestens 45%.

Ferner ermöglicht die Reflektivstrukturierung vorteilhaft, dass mehrere Bereiche mit unterschiedlichen Vorgaben für die Reflexion(swinkel) und/oder Transmission(swinkel) des Laserstrahls nebeneinander auf demselben Substrat innerhalb eines einzigen Strukturierungsprozesses herstellbar sind, sodass ein Spiegel erhalten wird, der in einem einzelnen Bauteil mehrere Bereiche mit unterschiedlichen Reflektivitäten, Reflexionswinkeln, Transmissivitäten und/oder Transmissionswinkeln aufweist.

Dies ermöglicht wiederum, dass der Laserstrahl mehrfach zwischen den Spiegel hin und zurück reflektiert wird, bevor er durch den Lichtaustritt aus dem Resonator austritt, ohne dass dafür eine Vielzahl von Spiegeln erforderlich sind. Dadurch wird die optische Weglänge und damit die Frequenzstabilität erhöht.

Durch Metaspiegelabschnitte ist dies mit einer einfacheren Herstellung erreichbar und die Justage ist einfacher als bei einer möglichen alternativen Spiegelanordnung zur Erhöhung der optischen Weglänge, bei der mehrere, gegeneinander unabhängig kippbare, dielektrische Spiegel oder Spiegelabschnitte verwendet werden, die einzeln hergestellt und/oder justiert werden müssen und anfällig für Umgebungseinflüsse wie Temperaturschwankungen hinsichtlich ihrer genauen Ausrichtung sind, was wiederum die Frequenzstabilität senkt.

Die Reflektivstrukturierung ist vorzugsweise mittels Elektronenstrahllithografie und/oder eines Ätzverfahrens in oder auf das Substrat eingebracht. Elektronenstrahllithografie ermöglicht es vorteilhaft, dass sehr kleine Strukturen, beispielsweise mit einer Strukturbreite von weniger als 100 nm, mit einer hohen Genauigkeit von beispielsweise mindestens 20 nm, in das Substrat einbringbar sind. Unter der Strukturbreite wird insbesondere die maximale Breite der Struktur entlang insbesondere derjenigen Richtung verstanden, die parallel zu einer gemittelten Oberfläche des Substrats verläuft.

Vorzugsweise weist die Reflektivstrukturierung einen Querschnitt auf, der eine Tiefe von maximal 5 µm, vorzugsweise maximal 2 µm, vorzugsweise maximal 1 µm, vorzugsweise maximal 0,5 µm aufweist.

Unter der Tiefe wird insbesondere eine Höhendifferenz des Querschnitts der Reflektivstrukturierung von einer höchsten Erhebung zu einer tiefsten Vertiefung verstanden.

Es ist möglich, dass die Reflektivstrukturierung ausschließlich in der Beschichtung, die sich auf dem Substrat befindet, angeordnet ist. Dabei ist es möglich, dass die Reflektivstrukturierung derart in die Beschichtung eingebracht ist, dass das Substrat an einzelnen Stellen freiliegt, dies ist aber nicht erforderlich.

Durch die geringe Tiefe ist das Rauschen des Laserstrahls, insbesondere der Frequenz, Amplitude und/oder der Phase des Laserstrahls, verringert.

Vorzugsweise weist die Reflektivstrukturierung eine Vielzahl geometrischer Oberflächenstrukturen in Form vorzugsweise von Kreuzen und/oder Stegen auf. Beispielsweise sind die Kreuze und/oder Stege zueinander parallel angeordnet, und/oder beispielsweise derart ausgerichtet, dass eine Polarisationsrichtung des Laserstrahls parallel zu einer Längsausrichtung der Stege liegt.

Vorzugsweise weisen die Kreuze und/oder Stege einen annähernd rechteckförmigen Querschnitt oder einen solchen Querschnitt auf, der aus rechteckförmigen Teilbereichen zusammengesetzt ist, beispielsweise in Form eines T oder eines auf dem Kopf stehenden L. Andere Querschnitte sind möglich, beispielsweise solche, die abschnittsweise nach oben sich verjüngende Säulenform aufweisen und/oder einen oder mehrere, insbesondere maximal zehn, übereinander angeordnete annähernd ellipsoidale Abschnitte. Unter annähernd wird insbesondere eine maximale Flächenabweichung des Querschnitts von einem idealen Querschnitt des Rechtecks, Ellipsoids und anderer genannter Formen von maximal 20%, insbesondere maximal 10%, insbesondere maximal 5%, der Gesamtquerschnittsfläche verstanden.

Vorzugsweise ist ein Abstand zwischen den Stegen und/oder Kreuzen konstant oder periodisch mit einer Periodenlänge von vorzugsweise maximal 2 µm, vorzugsweise maximal 0,5 µm, vorzugsweise maximal dem Doppelten einer Zentralwellenlänge des Laserstrahls, vorzugsweise maximal der Zentralwellenlänge des Laserstrahls. Durch die geringe Periodenlänge wird vorteilhaft eine anormale Reflektion des Laserstrahls an der Reflektivstrukturierung erreicht.

Entlang einer Draufsichtachse, die zu der Querschnittrichtung orthogonal ist und beispielsweise entlang der Richtung der Strukturbreite verläuft, weist die Reflektivstrukturierung beispielsweise eine Vielzahl von Kreuzen, Rechtecken, abgerundeten Rechtecken, Kreisen, Ellipsen, Dreiecken und/oder anderen Formen auf. Beispielsweise weist die Reflektivstrukturierung eines einzelnen Metaspiegelabschnitts eine Vielzahl von genau einer dieser Formen auf, deren genaue Form sich vorzugsweise voneinander um maximal 5% ihrer Draufsichtfläche entlang der Draufsichtachse unterscheidet.

Beispielsweise weist ein einzelner Metaspiegelabschnitt eine Vielzahl von Kreuzen auf, deren Draufsichtform, der Form entlang der Draufsichtachse, sich nur dahingehend um beispielsweise maximal 2 % unterscheidet, dass manche der Kreuze etwas abgerundetere Ecken aufweisen als andere der Kreuze. Alternativ kann ein einzelner Metaspiegelabschnitt auch verschiedene Formen in der Draufsicht haben.

Alternativ ist es beispielsweise möglich, dass eine Strukturbreite von den einzelnen Stegen nicht konstant ist, sondern sich beispielsweise von einem linken Ende zu einer Mitte entlang der Richtung der Strukturbreite erhöht und anschließend von der Mitte zu einem rechten Ende verringert oder umgekehrt. Dadurch reflektiert der Metaspiegelabschnitts als wäre er gekrümmt, ohne dass der Metaspiegelabschnitt tatsächlich gekrümmt ist.

Gemäß einer Ausführungsform ist mindestens ein Metaspiegelabschnitt des ersten Spiegels und/oder des zweiten Spiegels ein Krümmungs-Metaspiegelabschnitt vorgesehen. Insbesondere weist der Krümmungsbereich den Krümmungs-Metaspiegelabschnitt auf.

Gemäß einer Ausführungsform hat die mindestens eine dem anderen Spiegel zugewandte Oberfläche des Krümmungs-Metaspiegelabschnitts einen arithmetisch gemittelten Krümmungsradius von mindestens 1 Meter, insbesondere mindestens 10 Meter, insbesondere zumindest 100 Meter.

Gemäß einer bevorzugten Ausführungsform beträgt die effektive Krümmung höchstens 1 Meter, insbesondere höchstens 0,5 Meter, bevorzugt höchstens 0,25 Meter, beträgt. Vorzugsweise ist die effektive Krümmungsradius größer als die optische Weglänge im Resonator

Vorzugsweise weist der mindestens eine Krümmungs-Metaspiegelabschnitt, insbesondere jeder Metaspiegelabschnitt, mindestens 100 Stege oder Kreuze auf, vorzugsweise mindestens 1000 Stege oder Kreuze. Vorzugsweise verringert sich die Strukturbreite der einzelnen Stege oder Kreuze von einem linken Ende des Krümmungs-Metaspiegelabschnitts zu einer Mitte und/oder einem rechten Ende des Krümmungs-Metaspiegelabschnitts um mindestens 50%, insbesondere mindestens 70%. Unter der Strukturbreite wird die maximale Breite der Struktur beispielsweise eines einzelnen Stegs oder Kreuzes, entlang insbesondere derjenigen Richtung verstanden, die parallel zu einer gemittelten Oberfläche des Substrats verläuft. Die Strukturbreite wird insbesondere in einer Höhe des Stegs oder Kreuzes verstanden, die mindestens 50% einer Gesamthöhe des Stegs oder Kreuzes entspricht. Beispielsweise ist die Strukturbreite eines Stegs, der in Querschnitt eine T-Form aufweist, die Breite des Querbalkens des T. Ein weiteres Beispiel sind Strukturen, die entlang einer Draufsicht eine Kreuzform aufweisen und deshalb auch als Kreuze bezeichnet werden können. Deren Strukturbreite ist insbesondere die Breite eines der beiden zueinander orthogonalen Balken, die das Kreuz in der Draufsicht bilden. Vorzugsweise sind die Strukturbreiten der Stege oder Kreuze des Krümmungs-Metaspiegelabschnitts derart ausgebildet, dass sie, mit einer Abweichung von maximal 2% pro Strukturbreite, vom linken zu der Mitte und/oder dem rechten Ende mit einem Polynom zweiten Grades, einem Sinusabschnitt oder einem Cosinusabschnitt beschreibbar sind.

In einer weiteren Ausführungsform weist der erste Spiegel und/oder der zweite Spiegel mindestens zwei, insbesondere mindestens drei Teilkrümmungs-Metaspiegelabschnitte auf, die zusammen eine effektive Krümmung bewirken. Vorzugsweise ist jeder einzelne der Teilkrümmungs-Metaspiegelabschnitte planar ist und/oder eine Ausrichtung einer Oberfläche jedes der Teilkrümmungs-Metaspiegelabschnitte weicht von denen der anderen Teilkrümmungs-Metaspiegelabschnitte desselben Spiegels um maximal 1% ab. Insbesondere weist der Krümmungsbereich die Teilkrümmungs-Metaspiegelabschnitte auf. Vorzugsweise weist jeder der Teilkrümmungs-Metaspiegelabschnitte, insbesondere jeder Metaspiegelabschnitt, mindestens 100 Stege oder Kreuze auf, vorzugsweise mindestens 1000 Stege oder Kreuze. Vorzugsweise sind die Teilkrümmungs-Metaspiegelabschnitte zueinander benachbart angeordnet, insbesondere mit einem Abstand zwischen benachbarten Teilkrümmungs-Metaspiegelabschnitten von maximal 10% einer mittleren Breite der benachbarten Teilkrümmungs-Metaspiegelabschnitte.

Vorzugsweise verringert sich die Strukturbreite der einzelnen Stege oder Kreuze der Teilkrümmungs-Metaspiegelabschnitte von einem linken Ende eines links angeordneten der benachbarten Teilkrümmungs-Metaspiegelabschnitte zu einer Mitte eines mittig angeordneten der benachbarten Teilkrümmungs-Metaspiegelabschnitte und/oder zu einem rechten Ende eines rechts angeordneten der benachbarten Teilkrümmungs-Metaspiegelabschnitte um mindestens 50%, insbesondere um mindestens 70%.

Vorzugsweise sind die Strukturbreiten der Stege oder Kreuze der Teilkrümmungs-Metaspiegelabschnitts derart ausgebildet, dass sie, mit einer Abweichung von maximal 2% pro Strukturbreite, vom linken Ende des links angeordneten Teilkrümmungs-Metaspiegelabschnitts zu der Mitte und/oder dem rechten Ende des rechts angeordneten Teilkrümmungs-Metaspiegelabschnitts mit einem Polynom zweiten Grades, einem Sinusabschnitt oder einem Cosinusabschnitt beschreibbar sind.

Mittels einer numerischen Simulation ist bei einem vorgegebenen Einfallswinkel und für einen gewünschten Reflexionswinkel und/oder für eine gewünschte Reflektivität und/oder Transmittivität eine entsprechende konkrete Form der Reflektivstrukturierung ermittelbar, beispielsweise mittels numerischer Maxwell Solver basierend auf beispielsweise Methoden wie Rigorous coupled wave analysis (RCWA), Finite Elemente (FEM) oder Finite Difference Time-Domain (FDTD).

Diese Form ist dann mittels eines Strukturierungsverfahrens, beispielsweise Ätzverfahrens oder Elektronenstrahllithografie, in das Substrat oder die Beschichtung einbringbar.

Vorzugsweise weist der erste Spiegel mindestens zwei Metaspiegelabschnitte in Form eines ersten Erstspiegel-Metaspiegelabschnitts und eines zweiten Erstspiegel-Metaspiegelabschnitts auf. Vorzugsweise hat der erste Erstspiegel-Metaspiegelabschnitt eine erste Erstspiegel-Achse und der zweite Erstspiegel-Metaspiegelabschnitt eine zweite Erstspiegel-Achse, die sich von der ersten Erstspiegel-Achse unterscheidet.

Vorzugsweise sind die Erstspiegel-Metaspiegelabschnitte so ausgebildet, dass ein Laserstrahl, der durch den Lichteintritt auf den ersten Erstspiegel-Metaspiegelabschnitt fällt, auf den zweiten Spiegel reflektiert wird, und vom zweiten Spiegel auf den zweiten Erstspiegel-Metaspiegelabschnitt reflektiert wird.

Der erste und/oder zweite Erstspiegel-Metaspiegelabschnitt befinden sich vorzugsweise in dem Metaspiegelabschnitt. Mit anderen Worten weist der Metaspiegelabschnitt vorzugsweise die Erstspiegel-Metaspiegelabschnitte auf.

Unter der Spiegel-Achse wird eine Achse, insbesondere ein Vektor verstanden, die die Reflexionsausrichtung des Metaspiegelabschnitts angibt. Insbesondere ist die Spiegel-Achse diejenige Gerade, bei der ein Lichtstrahl, wenn er entlang der Spiegel-Achse auf den Spiegel einfällt, unter demselben Pfad, wie er aufgetroffen ist, zurückreflektiert wird. Aufgrund der besonderen Eigenschaft des Metaspiegelabschnitts ist es möglich, dass eine Spiegel-Achse nicht zwingend die Normale auf einer Grobausrichtung des Metaspiegelabschnitts ist. Unter der Grobausrichtung wird eine Ebene verstanden, die die Gesamtoberfläche des Metaspiegelabschnitts im Mittel angibt, ohne Beachtung der Feinstruktur, die durch die Reflektivstrukturierung gebildet wird. Wenn der Metaspiegelabschnitt wie ein Paraboloidspiegel reflektiert, wird unter der Spiegel-Achse insbesondere die Drehsymmetrieachse verstanden, bei der ein unter der Spiegel-Achse eintreffender Laserstrahl auf denselben Pfad zurückreflektiert wird.

Vorzugsweise sind die Erstspiegel-Metaspiegelabschnitte gegeneinander unbeweglich, vorzugsweise einstückig und/oder auf demselben Substrat ausgebildet.

Vorzugsweise weist der zweite Spiegel mindestens zwei Metaspiegelabschnitte in Form eines ersten Zweitspiegel-Metaspiegelabschnitts und eines zweiten Zweitspiegel-Metaspiegelabschnitts auf. Vorzugsweise hat der erste Zweitspiegel-Metaspiegelabschnitt eine erste Zweitspiegel-Achse und der zweite Zweitspiegel-Metaspiegelabschnitt eine zweite Zweitspiegel-Achse, die sich von der ersten Zweitspiegel-Achse unterscheidet.

Vorzugsweise sind die Erstspiegel-Metaspiegelabschnitte und die Zweitspiegel-Metaspiegelabschnitte so ausgebildet, dass ein Laserstrahl, der durch den Lichteintritt auf den ersten Erstspiegel-Metaspiegelabschnitt fällt, vom ersten Erstspiegel-Metaspiegelabschnitt auf den ersten Zweitspiegel-Metaspiegelabschnitt reflektiert wird, vom ersten Zweitspiegel-Metaspiegelabschnitt auf den zweiten Erstspiegel-Metaspiegelabschnitt reflektiert wird, vom zweiten Erstspiegel-Metaspiegelabschnitt auf den zweiten Zweitspiegel-Metaspiegelabschnitt reflektiert wird und, mittelbar oder unmittelbar, danach zum Lichtaustritt gelangt.

Dieselben Vorteile und vorzugsweisen Ausführungsformen wie für die Metaspiegelabschnitte des ersten Spiegels gelten für die Metaspiegelabschnitte des zweiten Spiegels.

Unter dem Merkmal, dass der Laserstrahl danach unmittelbar zum Lichtaustritt gelangt, wird insbesondere verstanden, dass der Laserstrahl nachdem er von dem zweiten Zweitspiegel-Metaspiegelabschnitt reflektiert wird, ohne weitere Reflexionen zum Lichtaustritt gelangt. Unter dass der Laserstrahl danach mittelbar zum Lichtaustritt gelangt, wird insbesondere verstanden, dass der Laserstrahl erst nach weiteren Reflexionen zum Lichtaustritt gelangt.

Vorzugsweise weist der erste Spiegel den Lichtaustritt auf, der vorzugsweise so ausgebildet ist, dass durch diesen ein eintretender Laserstrahl mit mindestens 50%, vorzugsweise mindestens 75%, vorzugsweise mindestens 99%, einer Eingangsleistung des Laserstrahls transmittiert wird und um weniger als 2°, vorzugsweise weniger als 1°, abgelenkt wird.

Vorzugsweise weist der erste Spiegel und der zweite Spiegel jeweils einen dritten Erstspiegel-Metaspiegelabschnitt und Zweitspiegel- Metaspiegelabschnitt auf, und vorzugsweise jeweils einen vierten Metaspiegelabschnitt, vorzugsweise mindestens jeweils sechs Metaspiegelabschnitte, vorzugsweise maximal jeweils 100 Metaspiegelabschnitte.

Je höher die Anzahl an Metaspiegelabschnitten ist, desto mehr verschiedene Reflexionen, Reflexionswinkel, Transmissionen und/oder Transmissionswinkel sind auf demselben Spiegel möglich. Dadurch ist es möglich, die Anzahl an Umläufen des Laserstrahls innerhalb des Resonators und damit die optische Weglänge und folglich die Frequenzstabilität zu erhöhen, ohne dass das Gesamtvolumen des Resonators erhöht werden muss. Mittels beispielsweise vier Metaspiegelabschnitten pro Spiegel und zusätzlich einem Lichteintritt auf dem zweiten Spiegel und einem Lichtaustritt aus dem ersten Spiegel ist es möglich, dass ein eintretender Laserstrahl insgesamt neun Mal durch den Resonator läuft, sodass die optische Weglänge das Neunfache der geometrischen Resonatorlänge beträgt. Dadurch wird vorteilhaft die Frequenzstabilität erhöht bei gleichzeitig einem geringen Volumen und Gewicht des Resonators und einem geringen thermischen Rauschen.

Bei einer konstanten Spiegelgesamtgröße weisen jedoch die einzelnen Erstspiegel-Metaspiegelabschnitte bei zunehmender Anzahl eine kleinere Reflexionsfläche auf, sodass eine zu hohe Anzahl nachteilig für die Stabilität und Toleranz des Resonators gegenüber minimalen Abweichungen des in den Lichteintritt eintreffenden Laserstrahl ist.

Vorzugsweise beträgt eine Reflexionsoberfläche jedes der Metaspiegelabschnitte mindestens 500 µm², vorzugsweise mindestens 100 µm², vorzugsweise mindestens 50 µm², vorzugsweise mindestens 5 µm². Insbesondere sind vorzugsweise jeder der Metaspiegelabschnitte mindestens um 5%, vorzugsweise mindestens um 10%, vorzugsweise mindestens um 15% größer als eine Auftrefffläche eines auf den Metaspiegelabschnitt auftreffenden Laserstrahls. Unter der Auftrefffläche wird diejenige Fläche verstanden, die ein Laserstrahl, der auf den Metaspiegelabschnitt auftrifft, beleuchtet. Der Vorteil ist, dass der gesamte Laserstrahl auf den Metaspiegelabschnitt auftrifft, bei entsprechender Anordnung und gegebenenfalls Justage, und dass kleinere Abweichungen beispielsweise eines Einfallswinkels des Laserstrahls in den Resonator nicht direkt dazu führen, dass der entsprechende Metaspiegelabschnitt nicht mehr vollständig vom Laserstrahl getroffen wird. Dadurch werden Verluste innerhalb des Resonators vermieden.

Vorzugsweise weist der Lichteintritt und/oder der Lichtaustritt ein Substrat mit einer in das Substrat oder in die Beschichtung eingebrachten Oberflächenstruktur auf, die insbesondere mittels eines Ätzverfahrens und/oder Elektronenstrahllithografie in und/oder auf das Substrat eingebracht ist.

Vorzugsweise ist der Lichteintritt ein Bereich auf dem ersten oder zweiten Spiegel, vorzugsweise auf dem zweiten Spiegel. Vorzugsweise ist der Lichtaustritt ein Bereich auf dem ersten oder zweiten Spiegel, vorzugsweise auf dem ersten Spiegel.

Vorzugsweise sind der Lichteintritt und/oder der Lichtaustritt von den Metaspiegelabschnitten verschieden, das heißt nicht überlappend.

Vorzugsweise weist der erste und/oder zweite Spiegel auf einer Rückseite, die von dem Resonatorinnenraum abgewandt und/oder gegenüber den Metaspiegelabschnitten angeordnet ist, mindestens einen Antireflexivbereich auf. Unter dem Antireflexivbereich wird insbesondere ein Oberflächenbereich des Spiegels verstanden, der so ausgebildet ist, dass eine Reflektivität eines auf den Antireflexivbereich treffenden Laserstrahls, zumindest innerhalb eines vorgegebenen Wellenlängenbereichs, weniger als 1% beträgt, vorzugsweise weniger als 0,2%, vorzugsweise weniger als 0,1%.

Der Antireflexivbereich ist vorzugsweise als Antireflexivbeschichtung, beispielsweise mit einer oder mehreren dielektrischen Schichten, oder als Oberflächenstruktur, die vorzugsweise mittels eines Ätzverfahrens oder Elektronenstrahllithografie in das Substrat und/oder eine Beschichtung auf dem Substrat des ersten und/oder zweiten Spiegels eingebracht ist, ausgebildet. Vorzugsweise ist der Antireflexivbereich so ausgebildet, dass er mindestens eine Auftrefffläche umfasst, durch die der Laserstrahl in den Laserresonator eintritt und/oder aus dem Laserresonator austritt. Es ist möglich, dass der Antireflexivbereich eine zusammenhängende Fläche umfasst oder mehrere voneinander beabstandete Teilflächen. Der Vorteil des Antireflexivbereichs ist, dass Verluste beim Eintritt des Laserstrahls in den Laserresonator und/oder beim Austritt aus dem Laserresonator verringert werden.

Vorzugsweise ist der Antireflexivbereich so ausgebildet, dass er mindestens eine Erstfläche umfasst, die exakt gegenüber den Metaspiegelabschnitten des entsprechenden Spiegels liegt. Beispielsweise ist die Erstfläche auf einer vom Innenraum abgewandten Oberfläche angeordnet, die gegenüber der Vorderseite des Spiegels liegt, die dem Innenraum zugewandt ist. Der Vorteil einer solchen Erstfläche ist, dass mögliche Anteile des Laserstrahls, die nicht an den Metaspiegelabschnitten reflektiert werden, daran gehindert werden, auf der Rückseite des Spiegels in den Laserresonator zurückreflektiert zu werden. Insbesondere werden Etalon-Reflektionseffekte zwischen Oberflächen des Spiegels verringert oder eliminiert. Insbesondere ist die Erstfläche vorzugsweise so angeordnet, dass kein Laserstrahl, der unter einem Winkel zwischen insbesondere 60° und 120° auf das Substrat des Spiegels und anschließend auf einen der Metaspiegelabschnitte treffen kann, der nicht zuvor auf die Erstfläche getroffen ist.

Vorzugsweise ist der Antireflexivbereich so ausgebildet, dass er zusätzlich zu der Erstfläche eine Zweitfläche umfasst, die vorzugsweise angrenzend an die Erstfläche angeordnet und/oder deren Gesamtflächeninhalt vorzugsweise mindestens 10% eines Gesamtflächeninhalts der Erstfläche beträgt, vorzugsweise mindestens 20%. Der Vorteil einer solchen Zweitfläche ist, dass Verluste auch bei geringen Abweichungen von einem senkrechten Laserstrahleintritt in den Spiegel verringert werden.

Vorzugsweise weist der erste und/oder zweite Spiegel einen Krümmungsbereich mit einer effektiven Krümmung ungleich Null auf, der vorzugsweise ein Bereich des Metaspiegelabschnitts ist. Der Krümmungsbereich ist vorzugsweise derart ausgebildet, dass er auf einen auftreffenden Laserstrahl wie eine gekrümmte Spiegeloberfläche, insbesondere wie eine konkave Spiegeloberfläche wirkt. Dies erhöht vorteilhaft die Resonatorstabilität.

Der Krümmungsbereich des ersten Spiegels weist vorzugsweise eine Reflektivstrukturierung auf einem Substrat auf, die mittels eines Ätzverfahrens und/oder Elektronenstrahllithografie in und/oder auf das Substrat eingebracht ist. Es ist möglich, aber nicht erforderlich, dass die Groboberfläche des Krümmungsbereichs tatsächlich eine Krümmung, die insbesondere konkav ist, aufweist. Durch die Reflektivstrukturierung ist durch anormale Reflektion ein vergleichbarer Effekt auch ohne eine entsprechende tatsächliche Krümmung erreichbar.

Vorzugsweise ist der Krümmungsbereich teiltransmittiv ausgebildet, vorzugsweise mit einer Transmittivität von mindestens 0,05%, vorzugsweise mindestens 0,1%, vorzugsweise maximal 80%, vorzugsweise maximal 50%, wobei sich die Werte darauf beziehen, welcher Anteil eines innerhalb des Resonators befindlichen und auf den Krümmungsbereich auftreffenden Laserstrahls derart transmittiert wird, dass er sich anschließend außerhalb des Resonators befindet. Vorzugsweise weist der teiltransmittive Krümmungsbereich eine Reflektivität auf, die als Summe zusammen mit der Transmittivität mindestens 80%, vorzugsweise mindestens 90% ergibt, vorzugsweise mindestens 99%, vorzugsweise mindestens 99,9 %.

Vorzugsweise ist der Krümmungsbereich zumindest teilweise überlappend mit dem Lichtaustritt ausgebildet, vorzugsweise überlappen der Krümmungsbereich und der Lichtaustritt komplett.

Vorzugsweise weist der erste Spiegel einen Transmissionsbereich auf, der so ausgebildet ist, dass durch diesen ein Laserstrahl mit mindestens 90%, vorzugsweise mindestens 98%, vorzugsweise mindestens 99%, einer Auftreffleistung des Laserstrahls transmittiert wird und dadurch aus dem Lichtaustritt den Laserresonator verlässt. Transmissionsbereich lenkt den Laserstrahl bei Transmission vorzugsweise um weniger als 2°, vorzugsweise weniger als 1°, ab.

Eine Vielzahl der Metaspiegelabschnitte, vorzugsweise alle Metaspiegelabschnitte, und falls auf dem ersten und/oder zweiten Spiegel vorhanden, vorzugsweise auch der Krümmungsbereich und/oder der Lichteintritt und/oder Lichtaustritt, sind vorzugsweise schachbrettartig angeordnet und/oder weisen eine rechteckige, insbesondere quadratische, Gesamtoberfläche auf.

Vorzugsweise weist der Laserresonator einen Abstandshalter auf, an dem der erste Spiegel und der zweite Spiegel derart angeordnet sind, dass ein Abstand zwischen dem ersten und zweiten Spiegel festgelegt ist. Vorzugsweise ist der Abstandshalter derart ausgebildet, dass der erste und/oder zweite Spiegel nicht gegeneinander verschiebbar und/oder kippbar sind.

Der erste und/oder zweite Spiegel ist vorzugsweise mit dem Abstandhalter mechanisch und/oder stoffschlüssig verbunden oder einstückig ausgebildet.

Beispielsweise ist der erste und/oder zweite Spiegel jeweils mit dem Abstandshalter mittels Molekularkräften verbunden, wobei eine Befestigungsoberfläche des ersten und/oder zweiten Spiegels und eine Befestigungsoberfläche des Abstandshalters vorzugsweise eine Oberflächenrauheit von durchschnittlich weniger als λ/6, vorzugsweise weniger als λ/8 aufweist, vorzugsweise weniger als λ/10 aufweist. Unter der Befestigungsoberfläche wird insbesondere diejenige Oberfläche verstanden, an der der erste und/oder zweite Spiegel und der Abstandshalter miteinander verbunden oder aneinander befestigt sind. Vorzugsweise befindet sich die Befestigungsoberfläche nicht auf derselben Oberfläche des Spiegels, auf der sich der oder die Metaspiegelabschnitt(e) befinden.

Vorzugsweise beträgt ein Gasdruck innerhalb des Laserresonators weniger als 0,5 bar, vorzugsweise weniger als 10⁻² mbar, vorzugsweise weniger als 10⁻⁴ mbar, vorzugsweise weniger als 10⁻⁶ mbar, vorzugsweise weniger als 10⁻⁸ mbar vorzugsweise weniger als 10⁻¹⁰ mbar. Der Vorteil ist, dass ein Laserstrahl im Resonatorinnenraum weniger Wechselwirkungen mit Gasmolekülen eingeht und dadurch das Rauschen verringert ist. Zudem ist eine Befestigung der Spiegel am Abstandshalter einfacher möglich, beispielsweise allein aufgrund des geringen Drucks im Innenraum und ohne zusätzliche Befestigungselemente wie Klebstoff oder Halteelemente.

Vorzugsweise beträgt eine Frequenzstabilität des Laserresonators mindestens 10⁻¹⁰, vorzugsweise mindestens 10⁻¹², vorzugsweise mindestens 10⁻¹⁴, vorzugsweise mindestens 10⁻¹⁶, vorzugsweise mindestens 10⁻¹⁸.

Dies wird vorzugsweise mittels der oben beschriebenen mindestens dreifachen optischen Weglänge im Vergleich zur geometrischen Resonatorlänge erreicht. Zusätzlich sind weitere Stabilisierungselemente wie beispielsweise eine Vibrationsisolierung und/oder Temperaturisolierung möglich.

Vorzugsweise hat der erste Spiegel zumindest einen Nicht-Krümmungsbereich, in dem die Oberfläche ungekrümmt ist und der keine effektive Krümmung hat. Alternativ oder zusätzlich hat der zweite Spiegel zumindest einen Nicht-Krümmungsbereich, in dem die Oberfläche ungekrümmt ist und der keine effektive Krümmung hat.

Vorzugsweise hat der Metaspiegelabschnitt hat eine Größe von zumindest 500 µm, insbesondere zumindest 750 µm, insbesondere zumindest 1 mm. Die Größe wird in Form eines Innenkreisdurchmesser gemessen. Der Innenkreis ist der Kreis maximalen Durchmessers, der in den Metaspiegelabschnitt eingeschrieben werden kann.

Ein weiterer Aspekt der Erfindung betrifft ein Lasersystem mit einem erfindungsgemäßen Laserresonator und einer Laserquelle. Vorzugsweise ist die Laserquelle ausgebildet zum Emittieren eines Laserstrahls, vorzugsweise Dauerstrichstrahls, derart, dass der Laserstrahl über den Lichteintritt in den Laserresonator eintritt. Beispielsweise weist die Laserquelle optische Elemente auf, die ausbildet sind zum Kollimieren, Ablenken, Filtern und/oder Polarisieren des Laserstrahls.

Vorzugsweise hat der zumindest eine Metaspiegelabschnitt hat eine Größe von zumindest dem Doppelten eines Laserstrahldurchmessers des Laserstrahls beim Auftreffen auf den Metaspiegelabschnitt.

Vorzugsweise ist die Laserquelle ausgebildet zum Anpassen des Strahldurchmessers des Laserstrahls auf eine Größe der Metaspiegelabschnitte der Spiegel, vorzugsweise derart, dass der Strahldurchmesser maximal die Hälfte, vorzugsweise maximal 25%, einer größten Ausdehnung eines kleinsten Metaspiegelabschnitts beträgt, wenn er auf den Lichteintritt trifft.

Vorzugsweise ist die Laserquelle ausgebildet zum Linearpolarisieren des Laserstrahls. Vorzugsweise sind die Reflexionsstrukturierungen der Metaspiegelabschnitte derart ausgebildet, dass sie für die Polarisation des Laserstrahls optimiert ist, sodass eine vorgegebene Reflektivität und/oder Transmittivität erreicht wird.

Vorzugsweise weist ein eintretender Laserstrahl eine Linienbreite von maximal 10 MHz, vorzugsweise maximal 10 kHz auf, vorzugsweise maximal 1 kHz auf, vorzugsweise maximal 100 Hz auf, vorzugsweise maximal 1 Hz auf. Der Laserresonator weist vorzugsweise derartige Reflektivitäten der Metaspiegelabschnitte auf, dass eine Linienbreite eines austretenden Laserstrahls aus dem Laserresonator um mindestens 10% kleiner ist als die Linienbreite des eintretenden Laserstrahls, vorzugsweise mindestens 15% kleiner.

Die Erfindung betrifft zudem ein Verfahren zur Herstellung eines Laserresonators. (a) Bereitstellen eines ersten und zweiten Spiegels, (b) Oberflächenstrukturieren eines Substrats des ersten und/oder zweiten Spiegels derart, dass zumindest einer der Spiegel mindestens einen Metaspiegelabschnitt aufweist, (c) Anordnen und Fixieren des ersten Spiegels und des zweiten Spiegels derart, dass durch den Lichteintritt ein Laserstrahl so auf den ersten Spiegel richtbar ist, dass der Laserstrahl vom ersten Spiegel auf den zweiten Spiegel reflektiert wird und aus dem Lichtaustritt austritt.

Vorzugsweise weist der Schritt Oberflächenstrukturieren den Schritt Einbringen einer Reflektivstrukturierung, insbesondere mittels eines Ätzverfahrens und/oder Elektronenstrahllithografie, in das Substrat und/oder in eine Beschichtung auf dem Substrat, auf. Es ist möglich, dass sich die Beschichtung bereits auf dem Substrat befindet oder dass die Beschichtung vor dem Oberflächenstrukturieren auf das Substrat aufgebracht wird. Die Beschichtung ist insbesondere mindestens 0,1 µm dick, insbesondere mindestens 0,5 µm, insbesondere mindestens 1 µm und/oder maximal 50 µm, insbesondere maximal 20 µm, insbesondere maximal 10 µm.

Vorzugsweise erfolgt das Einbringen der Reflektivstrukturierung derart, dass der erste Spiegel einen ersten Erstspiegel-Metaspiegelabschnitt und einen zweiten Erstspiegel-Metaspiegelabschnitt aufweist, wobei der erste Erstspiegel-Metaspiegelabschnitt eine erste Erstspiegel-Achse hat, und wobei der zweite Erstspiegel-Metaspiegelabschnitt eine zweite Erstspiegel-Achse hat, die sich von der ersten Erstspiegel-Achse unterscheidet.

Vorzugsweise erfolgt das Einbringen der Reflektivstrukturierung derart, dass der zweite Spiegel einen ersten Zweitspiegel-Metaspiegelabschnitt und einen zweiten Zweitspiegel-Metaspiegelabschnitt aufweist, wobei der erste Zweitspiegel-Metaspiegelabschnitt eine erste Zweitspiegel-Achse hat und wobei der zweite Zweitspiegel-Metaspiegelabschnitt eine zweite Zweitspiegel-Achse hat, die sich von der ersten Zweitspiegel-Achse unterscheidet.

Vorzugsweise weist das Verfahren ferner den Schritt Oberflächenstrukturieren eines Abschnitts des zweiten Spiegels derart auf, dass der Abschnitt den Lichteintritt aufweist. Vorzugsweise erfolgt das Oberflächenstrukturieren des Abschnitts derart, dass durch den Lichteintritt ein in den Resonatorinnenraum eintretender Laserstrahl mit mindestens 95%, vorzugsweise mindestens 98%, vorzugsweise mindestens 99%, einer Eingangsleistung des Laserstrahls transmittiert wird und/oder um weniger als 5°, vorzugsweise weniger als 2°, vorzugsweise weniger als 1°, abgelenkt wird.

Vorzugsweise weist das Verfahren ferner den Schritt Oberflächenstrukturieren eines Abschnitts des ersten Spiegels derart auf, dass der Abschnitt den Lichtaustritt aufweist. Vorzugsweise erfolgt das Oberflächenstrukturieren des Abschnitts derart, dass durch den Lichtaustritt ein aus dem Resonatorinnenraum austretender Laserstrahl mit mindestens 0,5%, vorzugsweise mindestens 5%, vorzugsweise mindestens 50%, einer Eingangsleistung des Laserstrahls transmittiert wird.

Vorzugsweise weist das Verfahren zudem die Schritte auf: (a) Bereitstellen eines Abstandshalters, der vorzugsweise eine Eintrittsöffnung und eine Austrittsöffnung aufweist, und (b) Anordnen des ersten Spiegels und zweiten Spiegels an dem Abstandhalter derart, dass vorzugsweise der erste Spiegel an der Eintrittsöffnung und der zweite Spiegel an der Austrittsöffnung angeordnet ist, dass ein Laserstrahl durch den Lichteintritt durch den Transmissionsbereich des zweiten Spiegels transmittiert wird, auf den ersten Erstspiegel-Metaspiegelabschnitt fällt und auf den ersten Zweitspiegel-Metaspiegelabschnitt reflektiert wird, von dem ersten Zweitspiegel-Metaspiegelabschnitt auf den zweiten Erstspiegel-Metaspiegelabschnitt reflektiert wird, vom zweiten Erstspiegel-Metaspiegelabschnitt auf den zweiten Zweitspiegel-Metaspiegelabschnitt reflektiert wird und, mittelbar oder unmittelbar, danach zum Lichtaustritt gelangt.

Beispielsweise werden die Spiegel mittels Andrückens an dem Abstandhalter fixiert. Vorzugsweise beträgt hierfür eine Oberflächenrauheit der Befestigungsoberflächen der Spiegel und des Abstandshalters durchschnittlich weniger als λ/6 µm, vorzugsweise weniger als λ/8 µm, vorzugsweise weniger als λ/10 µm. Dabei ist λ die Zentralwellenlänge des Laserstrahls. Der Vorteil ist, dass Molekularkräfte ausreichen, um die Spiegel am Abstandhalter zu halten, sodass Klebstoff oder andere Befestigungselemente, die in der Regel anfällig für Temperatur- und/oder Druckschwankungen sind, nicht erforderlich sind.

Vorzugsweise ist der Abstand A zwischen benachbarten linken Enden einzelner Strukturelemente der Reflektivstrukturierung, die beispielsweise Stege, Kreuze oder Säulen sind, entlang einer Richtung entlang der Strukturbreite um maximal 10% von einer Zentralwellenlänge λ des Laserstrahls 14 oder deren Hälfte, Viertel, Sechstel oder Achtel verschieden, vorzugsweise um maximal 5%, vorzugsweise um maximal 2%.

Im Folgenden wird die Erfindung anhand der beigefügten Figuren näher erläutert. Dabei zeigt:
- Figur 1a: ein erstes Ausführungsbeispiel eines erfindungsgemäßen Laserresonators,
- Figur 1b: ein erstes Ausführungsbeispiel eines Spiegels eines erfindungsgemäßen Laserresonators,
- Figur 1c: ein zweites Ausführungsbeispiel eines Spiegels eines erfindungsgemäßen Laserresonators,
- Figur 2a: ein Ausführungsbeispiel einer Reflektivstrukturierung ohne Beschichtung,
- Figur 2b: ein erstes Ausführungsbeispiel einer Reflektivstrukturierung eines Metaspiegelabschnitts mit Beschichtung,
- Figur 2c: ein zweites Ausführungsbeispiel einer Reflektivstrukturierung eines Metaspiegelabschnitts mit Beschichtung,
- Figur 2d: ein drittes Ausführungsbeispiel einer Reflektivstrukturierung eines Metaspiegelabschnitts mit Beschichtung,
- Figur 3a: ein Ausführungsbeispiel einer Reflektivstrukturierung eines Metaspiegelabschnitts mit Beschichtung und ohne effektive Krümmung,
- Figur 3b: ein Ausführungsbeispiel einer Reflektivstrukturierung eines Metaspiegelabschnitts mit Beschichtung und mit effektiver Krümmung,
- Figur 4a und b: ein zweites und drittes Ausführungsbeispiel eines erfindungsgemäßen Laserresonators.

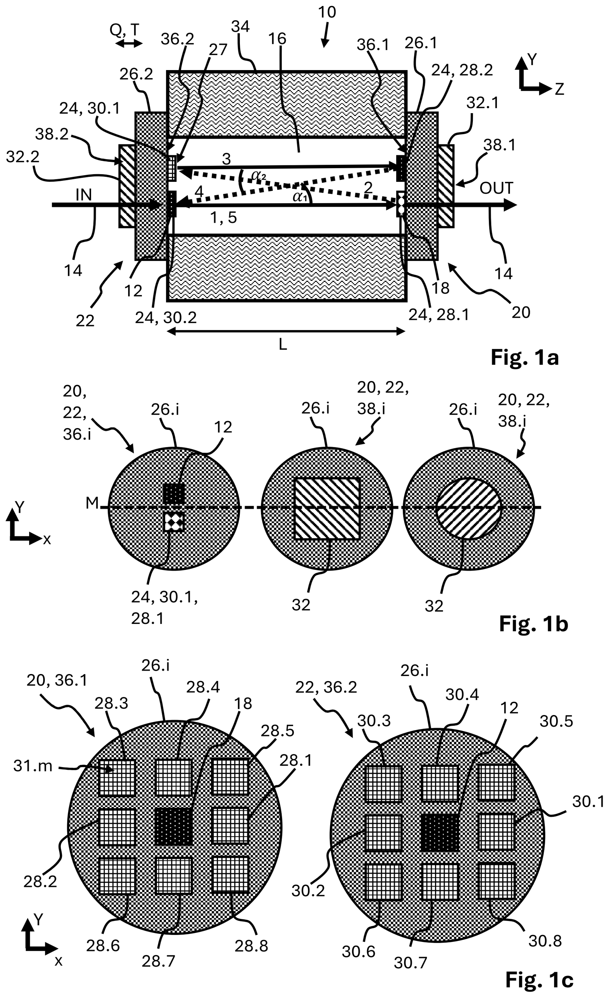

In Figur 1a ist eine schematische Darstellung eines ersten Ausführungsbeispiels eines erfindungsgemäßen Laserresonators 10 gezeigt, der einen Lichteintritt 12 für einen Laserstrahl 14 aufweist, durch den der Laserstrahl 14 in einen Resonatorinnenraum 16 eintreten kann. Der eintretende Laserstrahl ist mit "IN" gekennzeichnet. Der Laserresonator 10 weist einen Lichtaustritt 18 auf, aus dem der Laserstrahl 14 aus dem Resonatorinnenraum 20 austreten kann. Der Laserresonator 10 weist ersten Spiegel 20 und einen zweiten Spiegel 22 auf, wobei der erste Spiegel 20 und der zweite Spiegel 22 so angeordnet sind, dass der Laserstrahl 14, der durch den Lichteintritt 12 eintritt, so auf den ersten Spiegel 20 richtbar ist, dass der Laserstrahl 14 vom ersten Spiegel 20 auf den zweiten Spiegel 22 reflektiert wird und aus dem Lichtaustritt 18 austritt.

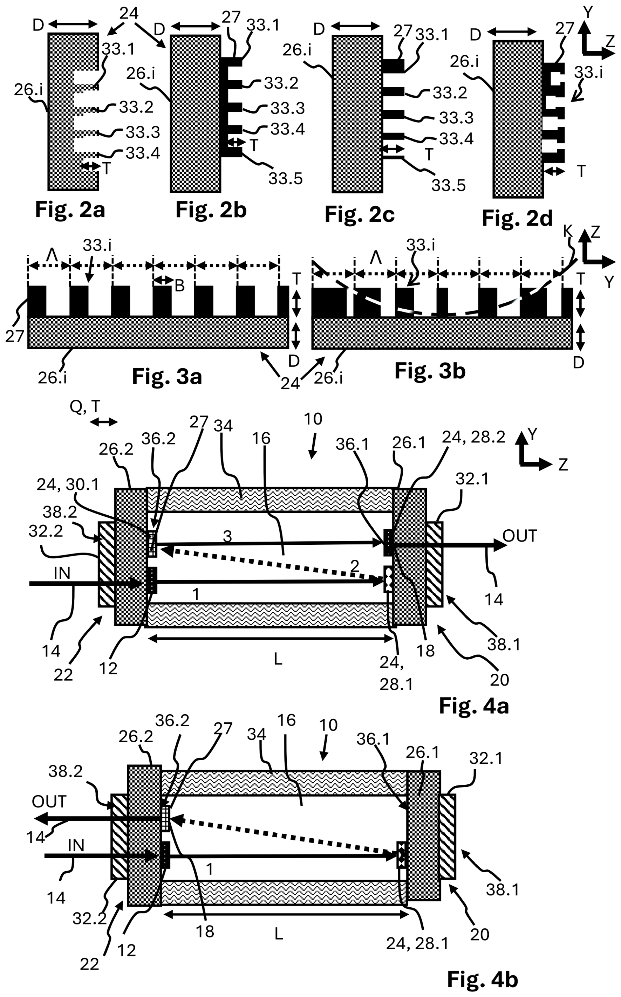

Der erste Spiegel 20 und der zweite Spiegel weisen in diesem Beispiel jeweils mindestens einen Metaspiegelabschnitt 24 auf, die in ein Substrat 26 des Spiegels 20, 22 eingebrachte Reflektivstrukturierung aufweisen, die beispielsweise mittels eines Ätzverfahrens und/oder Elektronenstrahllithografie in das Substrat 26 und/oder in eine Beschichtung 27 auf dem Substrat 26 eingebracht ist. Hier dargestellt ist als Beispiel die Reflektivstrukturierung in der Beschichtung 27 (siehe Figur 2a-d für weitere Beispiele).

Der erste Spiegel 20 weist beispielsweise einen ersten Erstspiegel-Metaspiegelabschnitt 28.1 und einen zweiten Erstspiegel-Metaspiegelabschnitt 28.2 auf. Der erste Erstspiegel-Metaspiegelabschnitt 28.1 hat eine erste Erstspiegel-Achse A_{28.1}, die sich von einer zweiten Erstspiegel-Achse A_{28.2} des zweiten Erstspiegel-Metaspiegelabschnitts 28.2 unterscheidet.

Der zweite Spiegel 22 weist einen ersten Zweitspiegel-Metaspiegelabschnitt 30.1 und einen zweiten Zweitspiegel-Metaspiegelabschnitt 30.2 auf, wobei der erste Zweitspiegel-Metaspiegelabschnitt 30.1 eine erste Zweitspiegel-Achse A_{30.1} hat, die sich von einer zweiten Zweitspiegel-Achse A_{30.2} des zweiten Zweitspiegel-Metaspiegelabschnitt 30.2 unterscheidet.

Die Erstspiegel-Metaspiegelabschnitte 28.j und die Zweitspiegel-Metaspiegelabschnitte 30.k sind so ausgebildet sind, dass ein Laserstrahl 14, der durch den Lichteintritt 12 auf den ersten Erstspiegel-Metaspiegelabschnitt 28.1 fällt - markiert als Lichtpfad 1, vom ersten Erstspiegel-Metaspiegelabschnitt 28.1 auf den ersten Zweitspiegel-Metaspiegelabschnitt 30.1 reflektiert wird - markiert als Lichtpfad 2 mit gestrichelter Linie, vom ersten Zweitspiegel-Metaspiegelabschnitt 30.1 auf den zweiten Erstspiegel-Metaspiegelabschnitt 28.2 reflektiert wird - markiert als Lichtpfad 3, vom zweiten Erstspiegel-Metaspiegelabschnitt 28.2 auf den zweiten Zweitspiegel-Metaspiegelabschnitt 30.2 reflektiert wird - markiert als Lichtpfad 4 mit gestrichelter Linie und, mittelbar oder unmittelbar, danach zum Lichtaustritt 18 gelangt. In diesem Beispiel gelangt der Lichtstrahl 14 nach der Reflexion an dem zweiten Zweitspiegel-Metaspiegelabschnitt 30.2 direkt zum Lichtaustritt 18 - markiert als Lichtpfad 5.

Der Lichteintritt 12 ist in diesem Beispiel nicht mit dem zweiten Zeitspiegel-Metaspiegelabschnitt 30.2 identisch, sondern optisch hinter diesem angeordnet. Dasselbe gilt für den Lichtaustritt 18 und den ersten Erstspiegel-Metaspiegelabschnitt 28.1.

Der Lichtpfad 1 und 5 sind in diesem Beispiel nicht identisch, jedoch in der gezeigten Seitenansicht nicht voneinander unterscheidbar. Beispielsweise sind der Winkel *α*₁ zwischen den Lichtpfaden 1 und 4 sowie der Winkel *α*₂ zwischen den Lichtpfaden 2 und 3 annähernd gleich groß, mit einer Abweichung von maximal 2°, vorzugsweise maximal 1°. In diesem Beispiel gilt beispielsweise *α*₁ = *α*₂. Die dafür nötigen Reflexionswinkel an den entsprechenden Metaspiegelabschnitten 28.j werden durch eine entsprechende Form der Beschichtung 27 mit Reflektivstrukturierung, beispielsweise in Form von Stegen und/oder Kreuzen mit entsprechendem Querschnittsprofil für die jeweiligen Reflexionswinkel, erreicht (siehe dazu Fig. 2a-2d, 3a, 3b für Querschnittsbeispiele).

Beispielsweise weist der erste Spiegel 20 auf einer Rückseite 38.1, die von dem Resonatorinnenraum 16 abgewandt und/oder gegenüber den Metaspiegelabschnitten 28.j angeordnet ist, einen Antireflexivbereich 32.1 auf.

In diesem Beispiel ist der Lichteintritt 12 im zweiten Spiegel 22 ausgebildet, vorzugsweise derart, dass der Lichteintritt 12 nicht mit einem der Zweitspiegel-Metaspiegelabschnitte 30.k überlappt. Beispielsweise weist der zweite Spiegel 22 auf einer Rückseite 38.2, die von dem Resonatorinnenraum 16 abgewandt und/oder gegenüber den Metaspiegelabschnitten 30.k angeordnet ist, einen Antireflexivbereich 32.2 auf.

Ein Abstandhalter 34 umgibt in diesem Fall den Resonatorinnenraum 16 derart, dass Licht nur durch den Lichteintritt 12 und Lichtaustritt 18 in den Resonatorinnenraum 16 eintreten oder austreten kann. Der erste und zweite Spiegel 20, 22 sind in diesem Beispiel an dem Abstandhalter 34 befestigt, beispielsweise mechanisch oder stoffschlüssig. Hier sind die Spiegel 20, 22 auf den Abstandhalter 34 angedrückt und die Befestigungsflächen weisen eine Oberflächenrauheit von weniger als 2 µm im Durchschnitt auf, sodass kein Klebstoff oder Befestigungselemente erforderlich sind.

Die Größenverhältnisse entsprechen nicht den realen Größenverhältnissen. Insbesondere beträgt beispielsweise eine Tiefe T des Antireflexivbereichs 32 entlang der z-Achse vorzugsweise weniger als 1 µm, während eine Gesamtlänge L des Resonatorinnenraums 16 beispielsweise mindestens 10 cm beträgt. Ferner sind beispielsweise der Lichteintritt 12, Lichtaustritt 18 und die Metaspiegelabschnitte 28.j, 30.k in der Realität vorzugsweise nicht als aus dem Substrat 26.i hervorstehende Strukturen ausgebildet, wie hier der Einfachheit halber dargestellt, sondern in das Substrat 26.i als Vertiefungen, mit typischen Tiefen T von weniger als 1 µm, insbesondere weniger als 700 Nanometer, eingebrachte Oberflächenstrukturen 31.m.

Vorzugsweise sind jeweils mindestens vier Metaspiegelabschnitte 28.j, 30.k auf dem ersten und zweiten Spiegel 20, 22 angeordnet, vorzugsweise mindestens acht.

In Figur 1b ist eine schematische Darstellung eines ersten Ausführungsbeispiels eines Spiegels 20, 22 eines erfindungsgemäßen Laserresonators 10 gezeigt. Der linke Teil von Figur 1b zeigt eine Vorderseite 36 beispielsweise des zweiten Spiegels 22 mit einem Substrat 26, einem Lichteintritt 12 in Form eines oberflächenstrukturierten Bereichs auf dem Substrat 26, der mittels eines Ätzverfahrens und/oder Elektronenstrahllithografie in die Beschichtung 27 auf dem Substrat 26 eingebracht ist, sowie einem ersten Zweitspiegel-Metaspiegelabschnitt 30.1. Der erste Spiegel 20 ist beispielsweise entsprechend ausgebildet, wobei anstelle des Lichteintritts 12 beispielsweise der Lichtaustritt 18 angeordnet ist und anstelle des ersten Zweitspiegel-Metaspiegelabschnitts 30.1 der erste Erstspiegel-Metaspiegelabschnitt 28.1 angeordnet ist.

Der mittlere und rechte Teil von Figur 1b zeigen jeweils eine beispielhafte Rückseite 38.j eines ersten oder zweiten Spiegels 20, 22 mit einem Substrat 26.1 beziehungsweise 26.2 und einer Antireflexivbeschichtung 32. Die Antireflexivbeschichtung 32 ist beispielsweise deutlich größer als eine Gesamtfläche aller Metaspiegelabschnitte 30.k oder 28.j ausgebildet, beispielsweise quadratisch und etwa neunmal so groß wie der einzelne Metaspiegelabschnitt 30.1, siehe die mittlere Darstellung von Fig. 1b, oder kreisförmig mit etwa einem Durchmesser, der einem Vierfachen einer Seitenlänge des einzelnen Metaspiegelabschnitts 30.1 entspricht, siehe die rechte Darstellung von Fig. 1b.

Die Antireflexivbeschichtung 32 ist beispielsweise als eine Mehrfachbeschichtung dielektrischer Schichten auf dem Substrat 26 ausgebildet oder mittels einer Oberflächenstruktur 31, beispielsweise mittels eines Ätzverfahrens und/oder Elektronenstrahllithografie in das Substrat 26.i, eingebracht. Eine Mittelachse, die eine Mitte M entlang der y-Achse durch das Substrat 26 kennzeichnet, ist als gestrichelte Linie gezeigt.

In Figur 1c ist eine schematische Darstellung eines zweiten Ausführungsbeispiels je eines ersten und zweiten Spiegels 20, 22 eines erfindungsgemäßen Laserresonators 10 gezeigt. In die Beschichtung 27 auf dem Substrat 26.i sind jeweils acht Metaspiegelabschnitte 28.j, 30.k eingebracht, beispielsweise mittels Elektronenstrahllithografie. Zudem weist der erste Spiegel 20 einen Lichtaustritt 18 und der zweite Spiegel 22 einen Lichteintritt 12 auf, die beispielsweise jeweils als Oberflächenstruktur 31, beispielsweise mittels Elektronenstrahllithografie, in das Substrat 26 eingebracht sind.

Vorzugsweise sind die Metaspiegelabschnitte 28.j, 30.k derart ausgebildet, dass ein Lichtstrahl 14, der durch den Lichteintritt 12 in den Resonatorinnenraum 16 eintritt, auf den ersten Erstspiegel-Metaspiegelabschnitt 28.1 fällt, von dort auf den ersten Zweitspiegel-Metaspiegelabschnitt 30.1 reflektiert wird, von dort auf den zweiten Erstspiegel-Metaspiegelabschnitt 28.2, von dort auf den zweiten Zweitspiegel-Metaspiegelabschnitt 30.2 und so weiter bis zum achten Erstspiegel-Metaspiegelabschnitt 28.8, von dem der Lichtstrahl 14 auf den achten Zweitspiegel-Metaspiegelabschnitt 30.8 reflektiert wird, von wo der Lichtstrahl 14 auf den Lichtaustritt 18 reflektiert wird.

Mit den beispielhaften Spiegeln 20, 22 wie in Figur 1c gezeigt, beträgt eine optische Weglänge des Lichtstrahls 14 durch den Resonatorinnenraum 16 das 17-fache der geometrischen Resonatorlänge.

Der Lichteintritt 12 und der Lichtaustritt 18 sind hier beispielsweise mittig auf dem Substrat 26 angeordnet hinsichtlich der x-Achse und der y-Achse. Die Metaspiegelabschnitte 28.j, 30.k sind schachbrettartig darum herum angeordnet, hier beispielsweise jeweils mit einem Abstand, der in etwa 40% einer Seitenlänge eines einzelnen Metaspiegelabschnitts 28.j, 30.k entspricht. Eine andere Anordnung des Lichteintritts 12, des Lichtaustritts 18 und der Metaspiegelabschnitte 30.k, 28.j ist möglich, ebenso ein geringerer oder größerer Abstand zwischen den Metaspiegelabschnitten 28.j, 30.k und/oder dem Lichteintritt 12 und /oder dem Lichtaustritt 18.

In Figur 2a bis 2d sind Ausführungsbeispiele für Reflektivstrukturierungen gezeigt. In Figur 2a ist ein Ausführungsbeispiel für eine Reflektivstrukturierung gezeigt, die in das Substrat 26.i eingebracht ist. In diesem Beispiel befindet sich auf dem Substrat 26.i auf der Vorderseite 36.i keine Beschichtung. In den Figuren 2b-2d befindet sich auf dem Substrat 26.i eine Beschichtung 27 auf der Vorderseite 36.i, in die die Reflektivstrukturierung eingebracht ist. In Figur 2b ist die Reflektivstrukturierung derart in die Beschichtung 27 eingebracht, dass das Substrat 26.i nicht freigelegt ist durch die Reflektivstrukturierung, das heißt, die Tiefe T der Reflektivstrukturierung ist kleiner als die Dicke D der Beschichtung 27. In Figur 2c weist die Reflektivstrukturierung eine Tiefe T auf, die gleich der Dicke D der Beschichtung 27 ist, sodass das Substrat hier jeweils an denjenigen Stellen, an denen die Reflektivstrukturierung die größte Tiefe T aufweist ist, freigelegt ist.

Schematisch ist in Figur 2c dargestellt, dass eine Stegbreite der verbleibenden Stege 33.i (siehe dazu auch Figur 3a-b) der Beschichtung 27 ungleichmäßig sein kann. Vorzugsweise verringert sich die Strukturbreite der einzelnen Stege oder Kreuze von einem linken Ende des Metaspiegelabschnitts, beispielsweise beim Steg 33.1, zu einem rechten Ende des Metaspiegelabschnitts, beispielsweise beim Steg 33.5, um mindestens 50%, insbesondere mindestens 70%. Vorzugsweise weist jeder Metaspiegelabschnitt mindestens 100 Stege oder Kreuze auf, insbesondre mindestens 1000. In den Figuren sind der Sichtbarkeit halber nur wenige Stege/Kreuze gezeigt.

In dem Ausführungsbeispiel in Figur 2b sind hingegen alle Stege gleich breit und gleich weit von benachbarten Stegen beabstandet.

In Figur 2d ist schematisch gezeigt, dass verschiedene Kombinationen von Querschnittsformen, die beispielsweise T-förmig oder wie ein auf dem Kopf stehendes L geformt sein können, möglich sind. Ebenso ist es möglich, dass die Stege unterschiedliche Tiefen T der Reflektivstrukturierung in der Beschichtung 27 aufweisen.

In Figur 3a ist ein Ausführungsbeispiel einer Reflektivstrukturierung mit einer Beschichtung 27 auf dem Substrat 26.i und ohne effektive Krümmung gezeigt. In diesem Beispiel ist Abstand A zwischen benachbarten linken Steg-Enden für alle Stege 33.i gleich, ebenso die Breite B und Tiefe T der Stege 33.i. Vorzugsweise ist der Abstand A um maximal 10% von einer Zentralwellenlänge λ des Laserstrahls 14 oder deren Hälfte, Viertel, Sechstel oder Achtel verschieden, vorzugsweise um maximal 5%, vorzugsweise um maximal 2%.

Figur 3b ein Ausführungsbeispiel einer Reflektivstrukturierung mit einer Beschichtung 27 auf dem Substrat 26.i und mit effektiver Krümmung K. Unter der effektiven Krümmung K wird insbesondere verstanden, dass der Metaspiegelabschnitt 24.i wie ein gekrümmter Spiegel wirkt, obwohl er in diesem Beispiel keine tatsächlich gekrümmte Oberfläche aufweist. Dieser Metaspiegelabschnitts 24.i kann als Krümmungs-Metaspiegelabschnitt bezeichnet werden. In diesem Beispiel wird die Krümmung K dadurch erreicht, dass eine Breite und ein Abstand der Stege 33.i sich von links nach rechts zunächst verringert und anschließend, insbesondere ab ungefähr grob einer Mitte des Metaspiegelabschnitts 24.i, wieder erhöht. In diesem Beispiel ist dabei der Abstand A zwischen benachbarten linken Steg-Enden konstant über den gesamten Metaspiegelabschnitt 24.i. Vorzugsweise verringert sich die Strukturbreite der einzelnen Stege oder Kreuze von einem linken Ende des Metaspiegelabschnitts zu einer Mitte des Krümmungs-Metaspiegelabschnitts um mindestens 50%, insbesondere mindestens 70%. Vorzugsweise weist jeder Metaspiegelabschnitt mindestens 100 Stege oder Kreuze auf, insbesondre mindestens 1000. In den Figuren sind der Sichtbarkeit halber nur wenige Stege/Kreuze gezeigt.

In Figur 4a ist ein zweites Ausführungsbeispiel eines erfindungsgemäßen Laserresonators 10 gezeigt, bei dem der Laserstrahl 14 nach dem Eintreten in den Resonatorinnenraum 16 durch den Lichteintritt 12 genau zweimal reflektiert wird, bevor er den Resonatorinnenraum 16 durch den Lichtaustritt 18 verlässt. Anders ist dies im ersten Ausführungsbeispiel in Figur 1a, wo der Laserstrahl 14 viermal innerhalb des Resonators 10 reflektiert wird. Der erste Spiegel 26.1 weist in Figur 4a den Lichtaustritt 18 und den ersten Erstspiegel-Metaspiegelabschnitt 28.1 auf und beispielsweise keine Metaspiegelabschnitte. Der zweite Spiegel 26.2 weist den Lichteintritt 12 und einen ersten Zweitspiegel-Metaspiegelabschnitt 30.1 auf und beispielsweise keine Metaspiegelabschnitte.

In Figur 4b ist ein drittes Ausführungsbeispiel eines erfindungsgemäßen Laserresonators 10 gezeigt, bei dem der Laserstrahl 14 nach dem Eintreten in den Resonatorinnenraum 16 durch den Lichteintritt 12 genau einmal reflektiert wird, an dem ersten Erstspiegel-Metaspiegelabschnitt 28.1, bevor er den Resonatorinnenraum 16 durch den Lichtaustritt 18 verlässt. Der erste Spiegel 26.1 weist den ersten Erstspiegel-Metaspiegelabschnitt 28.1 auf und beispielsweise keine weiteren Metaspiegelabschnitte. Der zweite Spiegel 26.2 weist den Lichteintritt 12 und den Lichtaustritt 18 auf und beispielsweise keine Metaspiegelabschnitte.

### Bezugszeichenliste

| | | | |
|---|---|---|---|
| 10 | Laserresonator | 33.i | Steg der Reflektivstrukturierung |
| 12 | Lichteintritt | 34 | Abstandhalter |
| 14 | Laserstrahl | 36.i | Vorderseite des i-ten Spiegels |
| 16 | Resonatorinnenraum | 38.i | Rückseite des i-ten Spiegels |
| 18 | Lichtaustritt | A_{28.j} | Erstspiegel-Achse |
| | | A_{30.k} | Zweitspiegel-Achse |
| 20 | erster Spiegel | i, j, k, m | Laufindices |
| 22 | zweiter Spiegel | K | effektive Krümmung |
| 24 | Metaspiegelabschnitt | L | Abstand der Spiegel, Resonatorlänge |
| 26.i | Substrat des i-ten Spiegels | λ | Zentralwellenlänge des Laserstrahls |
| 27 | Beschichtung (mit Reflektivstrukturierung) | A | Stegabstand der Reflektivstrukturierung |
| 28.j | Erstspiegel-Metaspiegelabschnitte | M | Mitte |
| | | Q | Querschnitt-Achse |
| | | T | Tiefe |
| 30.k | Zweitspiegel-Metaspiegelabschnitte | IN | eintretender Lichtstrahl |
| 31.m | Oberflächenstruktur | OUT | austretender Lichtstrahl |
| 32 | Antireflexivbereich | | |

## Patentansprüche

1. Laserresonator (10) mit
(a) einem Lichteintritt (12) für einen Laserstrahl (14),
(b) einem ersten Spiegel (20),
(c) einem zweiten Spiegel (22) und
(d) einem Lichtaustritt (18),
(e) wobei der erste Spiegel (20) und der zweite Spiegel (22) so angeordnet sind, dass ein Laserstrahl (14), der durch den Lichteintritt (12) eintritt, so auf den ersten Spiegel (20) richtbar ist, dass der Laserstrahl (14) vom ersten Spiegel (20) auf den zweiten Spiegel (22) reflektiert wird und aus dem Lichtaustritt (18) austritt,
(f) zumindest einer der Spiegel (20, 22) mindestens einen Metaspiegelabschnitt (24) aufweist,
**dadurch gekennzeichnet, dass**
(g) der erste Spiegel und/oder der zweite Spiegel jeweils mindestens einen Krümmungsbereich aufweist,
in dem mindestens einer der Metaspiegelabschnitte angeordnet ist und der eine effektive Krümmung ungleich Null aufweist, und
(h) eine Groboberfläche des Krümmungsbereichs ungekrümmt, insbesondere planar ist.

2. Laserresonator (10) nach Anspruch 1, **dadurch gekennzeichnet, dass** der Krümmungsbereich eine Reflektivstrukturierung auf einem Substrat aufweist, die mittels eines Ätzverfahrens und/oder Elektronenstrahllithografie in und/oder auf das Substrat eingebracht ist.

3. Laserresonator (10) nach einem der vorstehenden Ansprüche, **dadurch gekennzeichnet, dass**
der erste Spiegel (20) und/oder zweite Spiegel (22) mindestens einen Krümmungs-Metaspiegelabschnitt im Krümmungsbereich aufweist, der mindestens 100 Stege oder Kreuze aufweist, insbesondere mindestens 1000 Stege oder Kreuze, die insbesondere so ausgebildet sind, dass sich eine Strukturbreite der einzelnen Stege oder Kreuze von einem linken Ende des Krümmungs-Metaspiegelabschnitts zu einer Mitte und/oder einem rechten Ende des Krümmungs-Metaspiegelabschnitts um mindestens 50%, insbesondere mindestens 70% verringert.

4. Laserresonator (10) nach Anspruch 3, **dadurch gekennzeichnet, dass** die Strukturbreiten der Stege oder Kreuze des Krümmungs-Metaspiegelabschnitts derart ausgebildet, dass sie, mit einer Abweichung von maximal 2% pro Strukturbreite, vom linken zu der Mitte und/oder dem rechten Ende mit einem Polynom zweiten Grades, einem Sinusabschnitt oder einem Cosinusabschnitt beschreibbar sind.

5. Laserresonator (10) nach einem der vorstehenden Ansprüche, **dadurch gekennzeichnet, dass**
der erste Spiegel (20) und/oder zweite Spiegel (22) mindestens zwei, insbesondere mindestens drei Teilkrümmungs-Metaspiegelabschnitte im Krümmungsbereich aufweist, die jeweils mindestens 100 Stege oder Kreuze aufweisen, insbesondere mindestens 1000 Stege oder Kreuze,
und die Stege oder Kreuze so ausgebildet sind, dass sich eine Strukturbreite der einzelnen Stege oder Kreuze von einem linken Ende eines linken Teilkrümmungs-Metaspiegelabschnitts zu einer Mitte eines mittleren Teilkrümmungs-Metaspiegelabschnitts und/oder einem rechten Ende eines rechten Teilkrümmungs-Metaspiegelabschnitts um mindestens 50%, insbesondere mindestens 70% verringert.

6. Laserresonator (10) nach Anspruch 5, **dadurch gekennzeichnet, dass** die Strukturbreiten der Stege oder Kreuze der Teilkrümmungs-Metaspiegelabschnitte derart ausgebildet, dass sie, mit einer Abweichung von maximal 2% pro Strukturbreite, vom linken Ende des linken Teilkrümmungs-Metaspiegelabschnitts zu der Mitte des mittleren Teilkrümmungs-Metaspiegelabschnitts und/oder dem rechten Ende des rechten Teilkrümmungs-Metaspiegelabschnitts mit einem Polynom zweiten Grades, einem Sinusabschnitt oder einem Cosinusabschnitt beschreibbar sind.

7. Laserresonator (10) nach einem der vorstehenden Ansprüche, **dadurch gekennzeichnet, dass**
(a) der erste Spiegel (20) und zweite Spiegel (22) jeweils ein Substrat (26.1, 26.2) aufweist und dass
(b) der zumindest eine Metaspiegelabschnitt (24) eine in das Substrat (26) eingebrachte Reflektivstrukturierung (27) aufweist, die insbesondere mittels eines Ätzverfahrens und/oder Elektronenstrahllithografie in das Substrat (26) eingebracht ist,
(c) wobei die Reflektivstrukturierung (27)
einen Querschnitt (Q) aufweist, der eine Tiefe (T) von maximal 5 µm, vorzugsweise maximal 2 µm, vorzugsweise maximal 1 µm, vorzugsweise maximal 0,5 µm aufweist, und/oder
eine Vielzahl geometrischer Oberflächenstrukturen (31.j), die vorzugsweise periodisch sind und/oder eine Form von Kreuzen und/oder Stegen aufweisen, die insbesondere zueinander parallel angeordnet sind und/oder einen annähernd rechteckförmigen Querschnitt aufweisen.

8. Laserresonator (10) nach einem der vorstehenden Ansprüche, **dadurch gekennzeichnet, dass**
(a) der erste Spiegel (20) mindestens zwei Metaspiegelabschnitte (24) in Form
(i) eines ersten Erstspiegel-Metaspiegelabschnitts (28.1) und
(ii) eines zweiten Erstspiegel-Metaspiegelabschnitts (28.2) aufweist,
(b) wobei der erste Erstspiegel-Metaspiegelabschnitt (28.1) eine erste Erstspiegel-Achse (A_{28.1}) hat,
(c) der zweite Erstspiegel-Metaspiegelabschnitt (28.2) eine zweite Erstspiegel-Achse (A_{28.2}) hat, die sich von der ersten Erstspiegel-Achse (A_{28.1}) unterscheidet, und
(d) die Erstspiegel-Metaspiegelabschnitte (28.i) so ausgebildet sind, dass ein Laserstrahl (14), der durch den Lichteintritt (12) auf den ersten Erstspiegel-Metaspiegelabschnitt (28.1) fällt, auf den zweiten Spiegel (22) reflektiert wird, und vom zweiten Spiegel (22) auf den zweiten Erstspiegel-Metaspiegelabschnitt (28.2) reflektiert wird.

9. Laserresonator (10) nach Anspruch 8, **dadurch gekennzeichnet, dass**
(a) der zweite Spiegel (22) mindestens zwei Metaspiegelabschnitte (24) in Form
(i) eines ersten Zweitspiegel-Metaspiegelabschnitts (30.1) und
(ii) eines zweiten Zweitspiegel-Metaspiegelabschnitts (30.2) aufweist,
(b) wobei der erste Zweitspiegel-Metaspiegelabschnitt (30.1) eine erste Zweitspiegel-Achse (A_{30.1}) hat,
(c) der zweite Zweitspiegel-Metaspiegelabschnitt (30.2) eine zweite Zweitspiegel-Achse (A_{30.2}) hat, die sich von der ersten Zweitspiegel-Achse (A_{30.1}) unterscheidet, und
(d) die Erstspiegel-Metaspiegelabschnitte (28.i) und die Zweitspiegel-Metaspiegelabschnitte (30.i) so ausgebildet sind, dass
(i) ein Laserstrahl (14), der durch den Lichteintritt (12) auf den ersten Erstspiegel-Metaspiegelabschnitt (28.1) fällt, vom ersten Erstspiegel-Metaspiegelabschnitt (28.1) auf den ersten Zweitspiegel-Metaspiegelabschnitt (30.1) reflektiert wird,
(ii) vom ersten Zweitspiegel-Metaspiegelabschnitt (30.1) auf den zweiten Erstspiegel-Metaspiegelabschnitt (28.2) reflektiert wird,
(iii) vom zweiten Erstspiegel-Metaspiegelabschnitt (28.2) auf den zweiten Zweitspiegel-Metaspiegelabschnitt (30.2) reflektiert wird und,
(iv) mittelbar oder unmittelbar, danach zum Lichtaustritt (18) gelangt.

10. Laserresonator (10) nach einem der vorherigen Ansprüche, **dadurch gekennzeichnet, dass**
(a) der Lichteintritt (12) auf dem ersten oder zweiten Spiegel (20, 22) angeordnet ist und/oder
(b) der Lichtaustritt (18) auf dem ersten oder zweiten Spiegel (20, 22) angeordnet ist und
(c) der Lichteintritt (12) und/oder der Lichtaustritt (18) eine Oberflächenstruktur (31.j) aufweist, die in das Substrat (26.i) des ersten oder zweiten Spiegels (20, 22) eingebracht ist, insbesondere mittels eines Ätzverfahrens und/oder Elektronenstrahllithografie.

11. Laserresonator (10) nach einem der vorherigen Ansprüche, **gekennzeichnet durch**
(a) einen Abstandshalter (34), an dem der erste Spiegel (20) und der zweite Spiegel derart (22) befestigt sind, dass ein Abstand (L) zwischen dem ersten und zweiten Spiegel (20, 22) festgelegt ist,
(b) wobei insbesondere der erste und/oder zweite Spiegel mit dem Abstandshalter (34) mechanisch und/oder stoffschlüssig verbunden ist oder einstückig ausgebildet ist.

12. Laserresonator (10) nach einem der vorherigen Ansprüche, **dadurch gekennzeichnet, dass** eine Vielzahl der Metaspiegelabschnitte (24), der Krümmungsbereich, der Lichteintritt (12) und der Lichtaustritt (18) schachbrettartig angeordnet sind.

13. Verfahren zur Herstellung eines Laserresonators (10) mit einem Lichteintritt (12) und einem Lichtaustritt (18), mit den Schritten:
(a) Bereitstellen eines ersten und zweiten Spiegels (20, 22),
(b) Oberflächenstrukturieren eines Substrats (26.1, 26.2) des ersten Spiegels (20) und/oder zweiten Spiegels (22) derart, dass zumindest einer der Spiegel (20, 22) mindestens einen Metaspiegelabschnitt (24) aufweist, wobei der erste und/oder zweite Spiegel einen Krümmungsbereich mit einer effektiven Krümmung ungleich Null aufweist, und eine Groboberfläche des Krümmungsbereichs keine tatsächliche Krümmung aufweist und
(c) Anordnen und Fixieren des ersten Spiegels (20) und des zweiten Spiegels (22) derart, dass durch den Lichteintritt (12) ein Laserstrahl (14) so auf den ersten Spiegel (20) richtbar ist, dass der Laserstrahl (14) vom ersten Spiegel (20) auf den zweiten Spiegel (22) reflektiert wird und aus dem Lichtaustritt (18) austritt.

14. Verfahren nach Anspruch 13, **gekennzeichnet dadurch, dass** der Schritt des Oberflächenstrukturierens die folgenden Schritte aufweist:
(a) Einbringen einer Reflektivstrukturierung (27), insbesondere mittels eines Ätzverfahrens und/oder Elektronenstrahllithografie, in das Substrat (26), derart, dass
(i) der erste Spiegel (20) einen ersten Erstspiegel-Metaspiegelabschnitt (28.1) und einen zweiten Erstspiegel-Metaspiegelabschnitt (28.2) aufweist,
(ii) der erste Erstspiegel-Metaspiegelabschnitt (28.1) eine erste Erstspiegel-Achse (A_{28.1}) hat,
(iii) der zweite Erstspiegel-Metaspiegelabschnitt (28.2) eine zweite Erstspiegel-Achse (A_{28.2}) hat, die sich von der ersten Erstspiegel-Achse (A_{28.1}) unterscheidet, und/oder derart, dass
(b) der zweite Spiegel (22)
(i) einen ersten Zweitspiegel-Metaspiegelabschnitt (30.1) und einen zweiten Zweitspiegel-Metaspiegelabschnitt (30.2) aufweist,
(ii) wobei der erste Zweitspiegel-Metaspiegelabschnitt (30.1) eine erste Zweitspiegel-Achse (A_{30.1}) hat,
(iii) wobei der zweite Zweitspiegel-Metaspiegelabschnitt (30.2) eine zweite Zweitspiegel-Achse (A_{30.2}) hat, die sich von der ersten Zweitspiegel-Achse (A_{30.1}) unterscheidet.

15. Verfahren nach Anspruch 14, **gekennzeichnet durch** die Schritte:
(a) Oberflächenstrukturieren eines Abschnitts des zweiten Spiegels (22) derart, dass der Abschnitt der Lichteintritt (12) ist, durch den ein eintretender Laserstrahl (14) mit mindestens 95% einer Eingangsleistung des Laserstrahls (14) transmittiert wird und um weniger als 5°, vorzugsweise weniger als 2°, abgelenkt wird,
(b) Bereitstellen eines Abstandshalters (34), der insbesondere eine Eintrittsöffnung und eine Austrittsöffnung aufweist,
(c) Anordnen des ersten Spiegels (20) und zweiten Spiegels (22) an dem Abstandhalter derart, dass
(i) der zweite Spiegel (22) an der Eintrittsöffnung und der erste Spiegel (20) an der Austrittsöffnung angeordnet ist,
(ii) ein Laserstrahl (14) durch den Lichteintritt (14) des zweiten Spiegels (22) transmittiert wird,
(iii) der Laserstrahl (14) auf den ersten Erstspiegel-Metaspiegelabschnitt (28.1) fällt und auf den ersten Zweitspiegel-Metaspiegelabschnitt (30.1) reflektiert wird,
(iv) der Laserstrahl (14) von dem ersten Zweitspiegel-Metaspiegelabschnitt (30.1) auf den zweiten Erstspiegel-Metaspiegelabschnitt (28.2) reflektiert wird,
(v) der Laserstrahl (14) vom zweiten Erstspiegel-Metaspiegelabschnitt (28.2) auf den zweiten Zweitspiegel-Metaspiegelabschnitt (30.2) reflektiert wird und,
(vi) der Laserstrahl (14), mittelbar oder unmittelbar, danach zum Lichtaustritt (18) gelangt.
